# EUROPEAN PATENT SPECIFICATION

(11) **EP 2 290 232 B1**
(45) Date of publication and mention of the grant of the patent: **05.08.2015**
(21) Application number: 08752883.2
(22) Date of filing: 16.05.2008
(51) Int. Cl.: F03D 7/02

(54) **WINDMILL PITCH ANGLE CONTROLLER AND METHOD FOR CONTROLLING WINDMILL PITCH ANGLE**
STEIGUNGSWINKELSTEUERUNG EINER WINDKRAFTANLAGE UND VERFAHREN ZUR STEUERUNG DES STEIGUNGSWINKELS EINER WINDKRAFTANLAGE
DISPOSITIF DE COMMANDE D'ANGLE DE PAS D'EOLIENNE ET PROCEDE POUR COMMANDER L'ANGLE DE PAS D'UNE EOLIENNE

(43) Date of publication of application: 02.03.2011
(73) Proprietor: Mitsubishi Heavy Industries, Ltd., Tokyo 108-8215 (JP); MHI Vestas Offshore Wind A/S, 8200 Aarhus N (DK)
(72) Inventor: HAYASHI, Yoshiyuki, Nagasaki-shi Nagasaki 850-8610 (JP)
(74) Representative: Intès, Didier Gérard André
(86) International application number: PCT/JP2008/059048
(87) International publication number: WO 2009/139066

(56) References cited:
- EP-A2- 1 612 412
- EP-A2- 1 788 237
- EP-A2- 2 067 988
- WO-A1-2006/007838
- DE-A1-102005 034 899
- JP-A- 2003 201 952
- JP-A- 2006 016 984
- JP-A- 2007 064 062
- US-A1- 2009 148 286

## Description

### Technical Field

The present invention relates to a wind turbine pitch-angle control device for individually controlling pitch angles of wind turbine blades and to a method thereof.

### Background Art

Conventionally, in controlling a wind turbine, the wind turbine is halted when the wind speed exceeds a cutout wind speed at which operation should be halted or when an abnormality, such as acceleration or excessive power output, occurs. When the wind turbine is halted, the pitch angles of the wind turbine blades are moved from operating state positions to a feathering position (for example, refer to Patent Document 1).

### Patent Document 1:

Japanese Unexamined Patent Application, Publication No. 2006-16984 and corresponding European Application EP-A-1 612 412.

### Disclosure of Invention

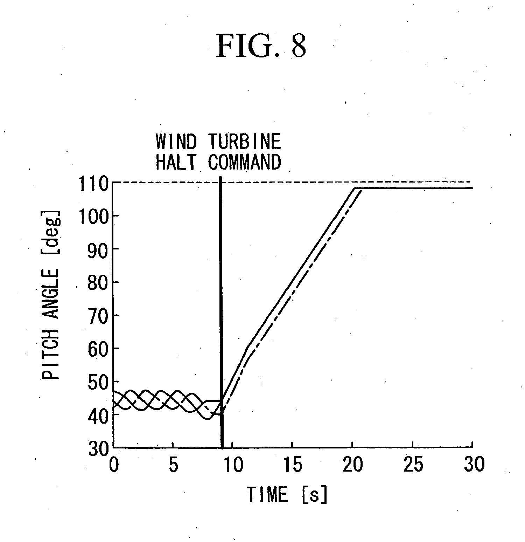

When an independent pitch control method for individually controlling the pitch angles of the respective wind turbine blades is employed, the pitch angles of the wind turbine blades do not necessarily match when the wind turbine is halted. Thus, for example, the wind turbine blades may be moved from different pitch angles to the feathering position (see Fig. 8). When wind turbine blades are moved from different pitch angles to the feathering position in this way, there is a problem in that the aerodynamic load increases due to an imbalance in the loads on the wind turbine blades.

The present invention was conceived to solve the above-described problem, and an object therefor is to provide a pitch-angle control method of wind turbine blades, a device thereof, and a wind turbine that are capable of reducing aerodynamic load when the wind turbine is halted.

To solve the above-described problem, the present invention employs the following solutions.

A first aspect of the present invention is a wind turbine pitch-angle control device configured to carry out individual pitch-angle control for individually controlling pitch angles of a plurality of wind turbine blades, wherein, when a wind turbine halt command is input, the pitch angles of the wind turbine blades are matched, and then the pitch angles of the wind turbine blades are moved to a feathering position.

By performing control in this way, when a wind turbine halt command is input, the pitch angles of the wind turbine blades can be moved to the feathering position with the pitch angles being matched. In this way, aerodynamic load generated by an imbalance in the pitch angles can be reduced.

In the above-described wind turbine pitch-angle control device, when the wind turbine halt command is input, a representative wind turbine blade may be identified on the basis of the pitch angle from among the plurality of wind turbine blades, the pitch angle of the representative wind turbine blade and the pitch angles of the other wind turbine blades may be matched, and then the pitch angles of the wind turbine blades may be moved to the feathering position.

In this way, by identifying the representative wind turbine blade from among a plurality of wind turbine blades and controlling the pitch angles of the other wind turbine blades so as to match the pitch angles to the pitch angle of the representative wind turbine blade, the pitch angles of the wind turbine blades can be matched efficiently.

More specifically, for example, the wind turbine blade whose pitch angle may be closest to the feathering position is identified as the representative wind turbine blade.

In this way, since the wind turbine blade whose pitch angle is closest to the feathering position is identified as the representative wind turbine blade and the pitch angles of the other wind turbine blades are matched to the pitch angle of the representative wind turbine blade, the pitch angles of the wind turbine blades can be moved to the feathering position efficiently.

In the above-described wind turbine pitch-angle control device, by setting the moving speed of the pitch angle of the representative wind turbine blade smaller than the moving speeds of the pitch angles of the wind turbine blades other than the representative wind turbine blade, the pitch angles of the wind turbine blades other than the representative wind turbine blade and the pitch angle of the representative wind turbine blade may be matched.

In this way, by setting the moving speed of the pitch angle of the representative wind turbine blade smaller than the moving speeds of the pitch angles of the wind turbine blades other than the representative wind turbine blade, the pitch angles of the other wind turbine blades can be matched to the pitch angle of the representative wind turbine blade while carrying out control for adjusting the pitch angle of the representative wind turbine blade closer to the feathering position. In this way, the time required for moving the pitch angles to the feathering position is reduced compared with when the movement of the pitch angle of the representative wind turbine blade is stopped.

In the above-described wind turbine pitch-angle control device, after the pitch angles of the wind turbine blades are matched, the wind turbine blades may be moved to the feathering position by controlling the wind turbine blades using a common pitch-angle control command.

Since the pitch angles of the wind turbine blades are moved on the basis of the common pitch-angle command after the pitch angles of the wind turbine blades are matched, control can be simplified, and the aerodynamic load on the wind turbine blades can be reduced.

A second aspect of the present invention is a wind turbine including the wind turbine pitch-angle control device described above.

A third aspect of the present invention is a wind turbine pitch-angle control method for carrying out independent pitch-angle control for individually controlling pitch angles of a plurality of wind turbine blades, wherein, when a wind turbine halt command is input, the pitch angles of the wind turbine blades are matched, and then the pitch angles of the wind turbine blades are moved to a feathering position.

The present invention is advantageous in that aerodynamic load can be reduced while the wind turbine is halted.

### Brief Description of Drawings

[Fig. 1] Fig. 1 illustrates, in outline, the configuration of a wind turbine according to an embodiment of the present invention.
[Fig. 2] Fig. 2 illustrates the configuration in the periphery of a wind turbine pitch-angle control device according an embodiment of the present invention.
[Fig. 3] Fig. 3 illustrates an operation flow of a wind turbine pitch-angle control device according to an embodiment of the present invention.
[Fig. 4] Fig. 4 illustrates an example of the time-sequential change in pitch angles of wind turbine blades when a pitch-angle control method of a wind turbine according to an embodiment of the present invention is employed.
[Fig. 5] Fig. 5 illustrates an example of the time-sequential change in pitch angles of wind turbine blades when a pitch-angle control method of a wind turbine according to an embodiment of the present invention is employed.
[Fig. 6] Fig. 6 illustrates an example of hub load when a pitch-angle control method of a wind turbine according to an embodiment of the present invention is employed.
[Fig. 7] Fig. 7 illustrates an example of hub load when pitch-angles are controlled individually without matching the pitch angles of the respective wind turbine blades.
[Fig. 8] Fig. 8 illustrates an example of the time-sequential change in the pitch angles of wind turbine blades when the pitch angles of the wind turbine blades are moved to a feathering position by individual control without matching the pitch angles of the wind turbine blades.

### Explanation of Reference Signs:

1: wind turbine
3: nacelle
5-1, 5-2, 5-3: wind turbine blade
10: wind turbine pitch-angle control device
11-1, 11-2, 11-3: driving device

### Best Mode for Carrying Out the Invention

An embodiment of a pitch-angle control method of a wind turbine blade, a device therefor, and a wind turbine according to the present invention will be described below with reference to the drawings.

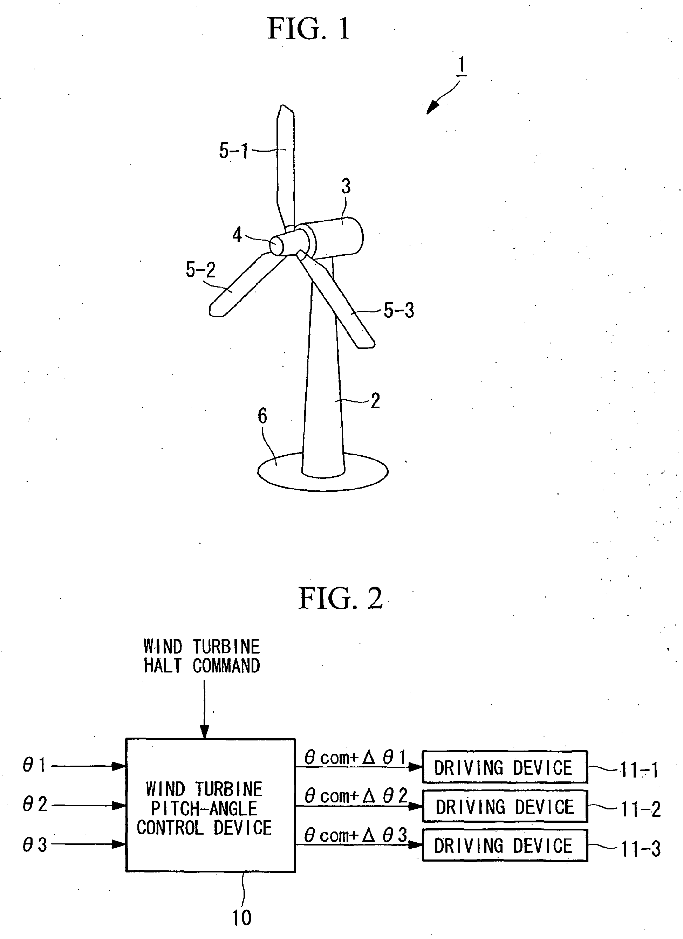

Fig. 1 is a block diagram illustrating, in outline, the configuration of the wind turbine according to this embodiment. As shown in Fig. 1, a wind turbine 1 has a tower 2 vertically provided on a base 6, a nacelle 3 provided at the upper end of the tower 2, and a rotor head 4 provided on the nacelle 3 in such a manner that it is rotatable around a substantially horizontal axis. Three wind turbine blades 5-1, 5-2, and 5-3 are attached, in a radial pattern, around the rotational axis of the rotor head 4. In this way, the force of the wind striking the wind turbine blades 5-1, 5-2, and 5-3 from the direction of the rotational axis of the rotor head 4 is converted to a motive force that rotates the rotor head 4 around the rotational axis. This motive energy is converted to electrical energy by a power generator.

A wind turbine pitch-angle control device 10 (see Fig. 2) according to this embodiment is, for example, accommodated inside the nacelle 3. The pitch-angle control device 10 is equipped with, for example, a central processing unit (CPU), a random access memory (RAM), a read only memory (ROM), and a hard disk drive (HDD). The pitch-angle control method of the wind turbine blades described below is realized by reading out a control program, which is stored in the HDD or the like, into the RAM or the like and executing it on the CPU.

As shown in Fig. 2, the wind turbine pitch-angle control device 10 acquires actual pitch angles of the wind turbine blades 5-1, 5-2, and 5-3 as input information and outputs pitch-angle command values θcom+Δθ1, θcom+Δθ2, and θcom+Δθ3 of the wind turbine blades as output information.

The above-mentioned θcom is a common pitch angle, which is a value common to all wind turbine blades. Δθ1, Δθ2, and Δθ3 are adjustment amounts that are set according to the wind turbine blades; for example, they are set to correspond to the loads on the wind turbine blades and the operating environment etc. of the wind turbine, such as wind speed and wind direction.

The pitch-angle command value θcom+Δθ1 is provided to a driving device 11-1 for drive control of the pitch angle of the wind turbine blade 5-1; the pitch-angle command value θcom+Δθ2 is provided to a driving device 11-2 for drive control of the pitch angle of the wind turbine blade 5-2; and the pitch-angle command value θcom+Δθ3 is provided to a driving device 11-3 for drive control of the pitch angle of the wind turbine blade 5-3. In this way, the pitch angles of the wind turbine blades 5-1, 5-2, and 5-3 are controlled by operating the driving devices 11-1, 11-2, and 11-3 in response to the input pitch-angle control values. The driving devices 11-1, 11-2, and 11-3 are each constructed of an actuator or the like having a fluid-pressure cylinder, etc.

In such a wind turbine pitch-angle control device 10, a wind turbine halt command is generated at another control device, which is not shown, when the wind speed exceeds the cutout wind speed at which operation should be halted or when an abnormality such as acceleration or excessive power output occurs.

When the wind turbine pitch-angle control device 10 receives such a wind turbine halt command, the pitch-angle command values for the wind turbine blades 5-1, 5-2, and 5-3 are calculated so as to move the wind turbine blades 5-1, 5-2, and 5-3 to the feathering positions. Here, the feathering position is a position in which the blade surface of a wind turbine blade is substantially parallel to the wind direction. At this position, it is possible to achieve a condition in which the effect of the wind power is minimized. Furthermore, the feathering position can be arbitrarily set within a pitch angle range that achieves the condition in which the effect of the wind power is substantially minimized. In this embodiment, the feathering position is set to, for example, 110°. Furthermore, in this embodiment, the position where the blade surface of a wind turbine blade is substantially perpendicular to the wind direction, i.e., a state most affected by wind, is defined as a pitch angle of 20°.

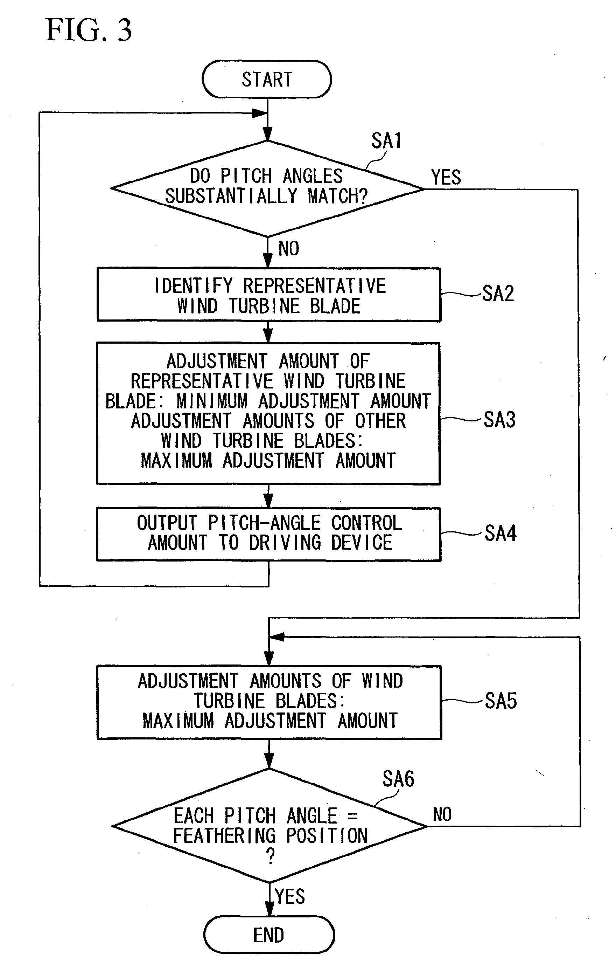

The pitch-angle control method of the wind turbine blades when a wind turbine halt command is input is described below with reference to Fig. 3.

First, when a wind turbine halt command is input, the pitch-angle control device 10 compares the actual pitch angles of the wind turbine blades 5-1, 5-2, and 5-3 and determines whether or not the pitch angles of the wind turbine blades substantially match (Step SA1 in Fig. 3). Specifically, the differences of the pitch angles are calculated by comparing two pitch angles of the wind turbine blades at a time. It is determined whether the maximum value of these differences is smaller than a reference value set in advance.

As a result, when the pitch angles of the wind turbine blades do not substantially match ("NO" in Step SA1 in Fig. 3), subsequently, the wind turbine blade whose actual pitch angle is closest to the feathering position is identified as a representative wind turbine blade (Step SA2 in Fig. 3). In this way, the wind turbine blade whose actual pitch angle is closest to 110° is identified as the representative wind turbine blade.

Descriptions will be provided below for when the wind turbine blade 5-1 is identified as the representative wind turbine blade.

Subsequently, the pitch-angle command values of the wind turbine blades are determined by setting a minimum adjustment amount Δθ_{LOW} set in advance as the adjustment amount Δθ1 corresponding to the wind turbine blade 5-1, which is the representative wind turbine blade, and by setting a maximum adjustment amount Δθ_{HIGH} set in advance as the adjustment amounts Δθ2 and Δθ3 corresponding to the other wind turbine blades 5-2 and 5-3 (Step SA3 in Fig. 3).

At this time, the adjustment amounts of the wind turbine blades whose pitch angle difference with respect to the representative wind turbine blade is less than a predetermined value are set to the minimum adjustment amount Δθ_{LOW}. In this way, the pitch angle difference, relative to the pitch angle of the representative wind turbine blade, of a wind turbine blade whose pitch angle is within a predetermined range can be prevented from increasing.

It is preferable to set the Δθ_{HIGH} to, for example, the capacity limit of each driving device or a value close to the limit. By setting it to such a value, the pitch angles of the wind turbine blades other than the representative wind turbine blade can be efficiently and quickly matched to the pitch angle of the representative wind turbine blade. Moreover, the minimum adjustment amount Δθ_{LOW} may be set to a value smaller than the maximum adjustment value, for example, zero. By setting the minimum adjustment amount Δθ_{LOW} to a value other than zero, the pitch angles of the other wind turbine blades can be matched to the pitch angle of the representative wind turbine blade while carrying out control for adjusting the pitch angle of the representative wind turbine blade closer to the feathering position, and thus the wind turbine blades can be efficiently moved to the feathering position.

In this embodiment, for example, the minimum adjustment amount Δθ_{LOW} is set to 1 (°/s), and the maximum adjustment amount Δθ_{HIGH} is set to 7 (°/s).

Next, the pitch-angle command values of the wind turbine blades 5-1, 5-2, and 5-3 set in this way are output to the driving devices 11-1, 11-2, and 11-3, respectively (Step SA4 in Fig. 3). In this way, control of the pitch angles based on these pitch-angle command values is carried out by the driving devices 11-1, 11-2, and 11-3, and, as a result, the actual pitch angles of the wind turbine blades 5-1, 5-2, and 5-3 change.

When the pitch angles of the wind turbine blades 5-1, 5-2, and 5-3 substantially match by repeating the processing described above ("YES" in Step SA1), subsequently, the pitch-angle command values corresponding to the wind turbine blades 5-1, 5-2, and 5-3 are set to a common value by setting the adjustment values Δθ1 to Δθ3 of the wind turbine blades 5-1, 5-2, and 5-3 to the maximum adjustment amount Δθ_{HICH} (Step SA5 in Fig. 3). In this way, after the pitch angles of the wind turbine blades 5-1, 5-2, and 5-3 match, the pitch angles of the wind turbine blades can be moved in synchronization to the feathering position. Moreover, at this time, since the pitch-angle command values are set to value close to the limit of the driving devices 11-1, 11-2, and 11-3, the pitch angles of the wind turbine blades can be efficiently and quickly moved to the feathering position.

Then, when the pitch angles of the wind turbine blades 5-1, 5-2, and 5-3 match the feathering position (110°) ("YES" in Step SA6 in Fig. 3), the processing ends.

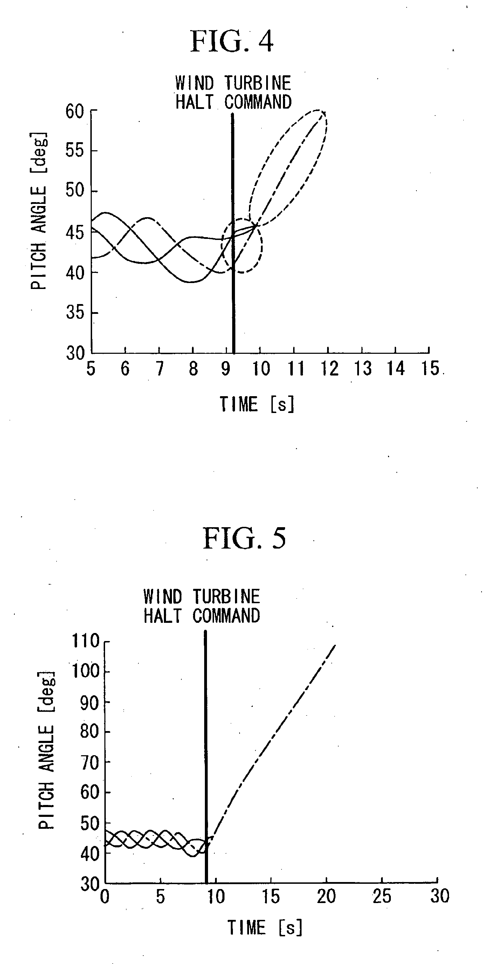

As described above, in the wind turbine pitch-angle control device according to this embodiment and the method thereof, when a wind turbine halt command is input, the wind turbine blade closest to the feathering position (closest to the fine side) is identified as the representative wind turbine blade. By setting the pitch-angle command value of this representative wind turbine blade smaller than the pitch-angle command values of the other wind turbine blades, the pitch angles of the other wind turbine blades can be matched to the pitch angle of the representative wind turbine blade by slowly moving the pitch angle of the representative wind turbine blade and quickly moving the pitch angles of the other wind turbine blades, as shown in Fig. 4. Then, after the pitch angles of the three wind turbine blades are matched, the three wind turbine blades can be moved in synchronization to the feathering position by controlling the pitch angles of the wind turbine blades on the basis of the common pitch-angle command value, as shown in Fig. 5.

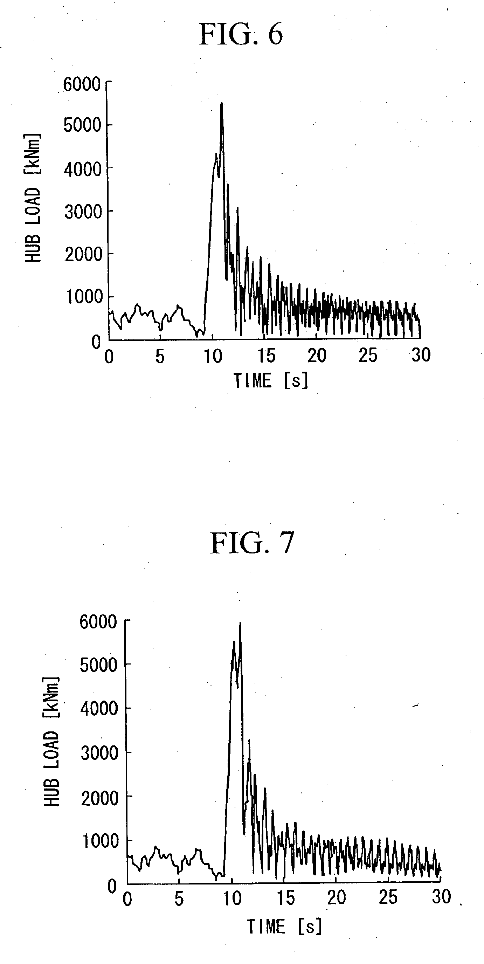

Fig. 6 illustrates the load on a hub when the pitch angles of the wind turbine blades are controlled by the wind turbine pitch-angle control device and the method thereof according to this embodiment, described above. Furthermore, Fig. 7 illustrates the load on the hub when, for example, the pitch angles are individually moved to the feathering position without matching the pitch angles of the wind turbine blades, as shown in Fig. 8. In Figs. 6 and 7, the horizontal axis represents time, and the vertical axis represents hub load. In this way, the maximum value of the hub load in Fig. 6 is 5458 kNm, and the maximum value of the hub load in Fig. 7 is 5958 kNm. As a result, a load reduction effect of 9% was achieved by employing the wind turbine pitch-angle control device according to this embodiment and the method thereof.

An embodiment of the present invention has been described in detail above with reference to the drawings. However, the detailed structure is not limited to this embodiment, and design modifications, etc. that do not depart from the scope of the present invention are also included.

For example, in this embodiment, when a wind turbine halt command is input, the common pitch angle θcom for the wind turbine blades may be set to zero. By setting the common pitch angle θcom to zero, the wind turbine blades can be controlled by the maximum adjustment amount Δθ_{HIGH} or minimum adjustment amount Δθ_{LOW}. In this way, since the moving speed of the representative wind turbine blade can be decreased even more, the pitch angles of the wind turbine blades can be matched even more quickly.

In this embodiment, the wind turbine blade whose pitch angle is closest to the feathering position is identified as the representative wind turbine blade. Instead, however, another wind turbine blade may be identified as the representative wind turbine blade, and the pitch angles of the other wind turbine blades may be matched to this representative wind turbine blade.

In this embodiment, the adjustment amount of the representative wind turbine blade is set to the minimum adjustment amount, and the adjustment amounts of the other wind turbine blades are set to the maximum adjustment amount. However, it is not limited to this example, and the adjustment amounts of the other wind turbine blades may be increased, in stages, starting from the one furthest from the feathering position. In other words, in the present invention, to move the pitch angles of the wind turbine blades to the feathering position, the pitch angles of the wind turbine blades should be matched before the pitch angles of the wind turbine blades reach the feathering position, and then, after the pitch angles are matched, the pitch angles of the wind turbine blades may be moved in synchronization. The procedure of matching the pitch angles of the wind turbine blades should be selected arbitrarily.

## Claims

1. A wind turbine pitch-angle control device (10) configured to carry out individual pitch-angle control for individually controlling pitch angles of a plurality of wind turbine blades (5-1, 5-2, 5-3),
**characterized in that**, when a wind turbine halt command is input, the pitch angles of the wind turbine blades are adjusted to be matched at a non-feathering position, whereby the actual pitch angles of the wind turbine blades are compared in order to judge whether the pitch angles of the wind turbine blades are matched or not, and
then, once the pitch angles of the wind turbine blades are judged to be matched, the pitch angles of the wind turbine blades are moved to a feathering position by controlling the wind turbine blades using a common pitch-angle control command.

2. The wind turbine pitch-angle control device (10) according to Claim 1, **characterized in that**, when the wind turbine halt command is input, a representative wind turbine blade is identified on the basis of the pitch angle from among the plurality of wind turbine blades (5-1, 5-2, 5-3), the pitch angle of the representative wind turbine blade and the pitch angles of the other wind turbine blades are matched, and then the pitch angles of the wind turbine blades are moved to the feathering position.

3. The wind turbine pitch-angle control device (10) according to Claim 2, **characterized in that** the wind turbine blade whose pitch angle is closest to the feathering position is identified as the representative wind turbine blade.

4. The wind turbine pitch-angle control device (10) according to Claim 3, **characterized in that**, by setting the moving speed of the pitch angle of the representative wind turbine blade smaller than the moving speeds of the pitch angles of the wind turbine blades other than the representative wind turbine blade, the pitch angles of the wind turbine blades other than the representative wind turbine blade and the pitch angle of the representative wind turbine blade are matched.

5. A wind turbine pitch-angle control device (10) configured to carry out individual pitch-angle control for individually controlling pitch angles of a plurality of wind turbine blades (5-1, 5-2, 5-3),
wherein, when a wind turbine halt command is input, the pitch angles of the wind turbine blades are matched at a non-feathering position, whereby the actual pitch angles of the wind turbine blades are compared in order to judge whether the pitch angles of the wind turbine blades are matched or not, and then once the pitch angles of the blades are judged to be matched then the pitch angles of the wind turbine blades are moved to a feathering position, **characterized in that**, the pitch angles of the wind turbine blades are matched by repeating operations of:
(a) identifying a representative wind turbine blade that has pitch angle closest to the feathering position from among the plurality of wind turbine blades; and
(b) setting the moving speed of the pitch angle of the representative wind turbine blade smaller than the moving speeds of the pitch angles of the wind turbine blades other than the representative wind turbine blade.

6. The wind turbine pitch-angle control device (10) according to Claim 5, **characterized in that**, after the pitch angles of the wind turbine blades are matched, the wind turbine blades are moved to the feathering position by controlling the wind turbine blades using a common pitch-angle control command.

7. A wind turbine comprising:
the wind turbine pitch-angle control device (10) according to Claims 1 to 6.

8. A wind turbine pitch-angle control method for carrying out independent pitch-angle control for individually controlling pitch angles of a plurality of wind turbine blades,
**characterized in that**, when a wind turbine halt command is input,
the pitch angles of the wind turbine blades are adjusted to be matched at a non-feathering position, whereby the actual pitch angles of the wind turbine blades are compared in order to judge whether the pitch angles of the wind turbine blades are matched or not, and
then, once the pitch angles of the wind turbine blades are judged to be matched, the pitch angles of the wind turbine blades are moved to a feathering position by controlling the wind turbine blades using a common pitch-angle control command.

9. A wind turbine pitch-angle control method for carrying out independent pitch-angle control for individually controlling pitch angles of a plurality of wind turbine blades (5-1, 5-2, 5-3),
wherein, when a wind turbine halt command is input, the pitch angles of the wind turbine blades are matched at a non-feathering position, whereby the actual pitch angles of the wind turbine blades are compared in order to judge whether the pitch angles of the wind turbine blades are matched or not, and then once the pitch angles of the blades are judged to be matched then the pitch angles of the wind turbine blades are moved to a feathering position,
**characterized in that**, the pitch angles of the wind turbine blades are matched by repeating operations of:
(a) identifying a representative wind turbine blade that has pitch angle closest to the feathering position from among the plurality of wind turbine blades; and
(b) setting the moving speed of the pitch angle of the representative wind turbine blade smaller than the moving speeds of the pitch angles of the wind turbine blades other than the representative wind turbine blade.

## Patentansprüche

1. Steigungswinkelsteuerungsvorrichtung (10) einer Windkraftanlage, die dazu ausgebildet ist, individuelle Steigungswinkelsteuerung zum individuellen Steuern von Steigungswinkeln von mehreren Windkraftanlagen-Rotorblättern (5-1, 5-2, 5-3) durchzuführen,
**dadurch gekennzeichnet, dass**, wenn ein Windkraftanlagen-Haltebefehl eingegeben wird, die Steigungswinkel der Windkraftanlagen-Rotorblätter eingestellt werden, um in einer Nicht-Segelstellung abgeglichen zu werden, wobei die Ist-Steigungswinkel der Windkraftanlagen-Rotorblätter verglichen werden, um zu beurteilen, ob die Steigungswinkel der Windkraftanlagen-Rotorblätter abgeglichen sind oder nicht, und
dann, sobald die Steigungswinkel der Windkraftanlagen-Rotorblätter als abgeglichen beurteilt wurden, die Steigungswinkel der Windkraftanlagen-Rotorblätter durch Steuern der Windkraftanlagen-Rotorblätter mittels eines gemeinsamen Steigungswinkelsteuerungsbefehls in eine Segelstellung zu bringen.

2. Steigungswinkelsteuerungsvorrichtung (10) einer Windkraftanlage nach Anspruch 1, **dadurch gekennzeichnet, dass**, wenn der Windkraftanlagen-Haltebefehl eingegeben wird, ein repräsentatives Windkraftanlagen-Rotorblatt auf der Grundlage des Steigungswinkels aus den mehreren Windkraftanlagen-Rotorblättern (5-1, 5-2, 5-3) bestimmt wird, der Steigungswinkel des repräsentativen Windkraftanlagen-Rotorblatts und die Steigungswinkel der anderen Windkraftanlagen-Rotorblätter abgeglichen werden und die Steigungswinkel der Windkraftanlagen-Rotorblätter dann in die Segelstellung bewegt werden.

3. Steigungswinkelsteuerungsvorrichtung (10) einer Windkraftanlage nach Anspruch 2, **dadurch gekennzeichnet, dass** das Windkraftanlagen-Rotorblatt, dessen Steigungswinkel der Segelstellung am nächsten ist, als repräsentatives Windkraftanlagen-Rotorblatt bestimmt wird.

4. Steigungswinkelsteuerungsvorrichtung (10) einer Windkraftanlage nach Anspruch 3, **dadurch gekennzeichnet, dass** durch Einstellen der Bewegungsgeschwindigkeit des Steigungswinkels des repräsentativen Windkraftanlagen-Rotorblatts auf einen kleineren Wert als die Bewegungsgeschwindigkeiten der Steigungswinkel der anderen Windkraftanlagen-Rotorblätter als dem repräsentativen Windkraftanlagen-Rotorblatt die Steigungswinkel der anderen Windkraftanlagen-Rotorblätter als des repräsentativen Windkraftanlagen-Rotorblatts und der Steigungswinkel des repräsentativen Windkraftanlagen-Rotorblatts abgeglichen werden.

5. Steigungswinkelsteuerungsvorrichtung (10) einer Windkraftanlage, die dazu ausgebildet ist, eine individuelle Steigungswinkelsteuerung zum individuellen Steuern von Steigungswinkeln von mehreren Windkraftanlagen-Rotorblättern (5-1, 5-2, 5-3) durchzuführen, wobei,
wenn ein Windkraftanlagen-Haltebefehl eingegeben wird, die Steigungswinkel der Windkraftanlagen-Rotorblätter in einer Nicht-Segelstellung abgeglichen werden, wobei die Ist-Steigungswinkel der Windkraftanlagen-Rotorblätter verglichen werden, um zu beurteilen, ob die Steigungswinkel der Windkraftanlagen-Rotorblätter abgeglichen sind oder nicht, und dann, sobald die Steigungswinkel der Rotorblätter als abgeglichen beurteilt werden, die Steigungswinkel der Windkraftanlagen-Rotorblätter dann in eine Segelstellung bewegt werden,
**dadurch gekennzeichnet, dass** die Steigungswinkel der Windkraftanlagen-Rotorblätter abgeglichen werden durch Wiederholen von Arbeitsgängen des:
(a) Bestimmens eines repräsentativen Windkraftanlagen-Rotorblatts, welches einen Steigungswinkel am nächsten bei der Fahnenstellung aufweist, von den mehreren Vielzahl von Windkraftanlagen-Rotorblättern, und
(b) Einstellen der Bewegungsgeschwindigkeit des Steigungswinkels des repräsentativen Windkraftanlagen-Rotorblatts auf einen kleineren Wert als die Bewegungsgeschwindigkeiten der Steigungswinkel der anderen Windkraftanlagen-Rotorblätter als dem repräsentativen Windkraftanlagen-Rotorblatt.

6. Steigungswinkelsteuerungsvorrichtung (10) einer Windkraftanlage nach Anspruch 5, **dadurch gekennzeichnet, dass**, nachdem die Steigungswinkel der Windkraftanlagen-Rotorblätter abgeglichen wurden, die Windkraftanlagen-Rotorblätter durch Steuern der Windkraftanlagen-Rotorblätter mittels eines gemeinsamen Steigungswinkelsteuerungsbefehls in die Segelstellung bewegt werden.

7. Windkraftanlage, umfassend:
die Steigungswinkelsteuerungsvorrichtung (10) einer Windkraftanlage nach Anspruch 1 bis 6.

8. Windkraftanlagensteigungswinkel-Steuerungsverfahren zum Durchführen einer unabhängigen Steigungswinkelsteuerung zum individuellen Steuern von Steigungswinkeln von mehreren Windkraftanlagen-Rotorblättern,
**dadurch gekennzeichnet, dass**, wenn ein Windkraftanlagen-Haltebefehl eingegeben wird,
die Steigungswinkel der Windkraftanlagen-Rotorblätter derart eingestellt werden, dass sie in einer Nicht-Segelstellung abgeglichen werden, wobei die Ist-Steigungswinkel der Windkraftanlagen-Rotorblätter verglichen werden, um zu beurteilen, ob die Steigungswinkel der Windkraftanlagen-Rotorblätter abgeglichen sind oder nicht, und
dann, sobald die Steigungswinkel der Windkraftanlagen-Rotorblätter als abgeglichen beurteilt wurden, die Steigungswinkel der Windkraftanlagen-Rotorblätter durch Steuern der Windkraftanlagen-Rotorblätter mittels eines Steigungswinkelsteuerungsbefehls in eine Segelstellung bewegt werden.

9. Windkraftanlagensteigungswinkel-Steuerungsverfahren zum Durchführen von unabhängiger Steigungswinkelsteuerung zum individuellen Steuern von Steigungswinkeln von mehreren Windkraftanlagen-Rotorblättern (5-1, 5-2, 5-3),
wobei, wenn ein Windkraftanlagen-Haltebefehl eingegeben wird, die Steigungswinkel der Windkraftanlagen-Rotorblätter in einer Nicht-Segelstellung abgeglichen werden, wobei die Ist-Steigungswinkel der Windkraftanlagen-Rotorblätter verglichen werden, um zu beurteilen, ob die Steigungswinkel der Windkraftanlagen-Rotorblätter abgeglichen sind oder nicht, und dann, sobald die Steigungswinkel der Rotorblätter als abgeglichen beurteilt werden, die Steigungswinkel der Windkraftanlagen-Rotorblätter dann in eine Segelstellung bewegt werden,
**dadurch gekennzeichnet, dass** die Steigungswinkel der Windkraftanlagen-Rotorblätter abgeglichen werden durch Wiederholen von Arbeitsgängen des:
(a) Bestimmens eines repräsentativen Windkraftanlagen-Rotorblatts, welches einen Steigungswinkel am nächsten bei der Fahnenstellung aufweist, aus den mehreren Windkraftanlagen-Rotorblättern, und
(b) Einstellen der Bewegungsgeschwindigkeit des Steigungswinkels des repräsentativen Windkraftanlagen-Rotorblatts auf einen kleineren Wert als die Bewegungsgeschwindigkeiten der Steigungswinkel der anderen Windkraftanlagen-Rotorblätter als dem repräsentativen Windkraftanlagen-Rotorblatt.

## Revendications

1. Dispositif de commande d'angle de pas d'éolienne (10) configuré pour réaliser une commande d'angle de pas individuelle afin de commander individuellement des angles de pas d'une pluralité de pales d'éolienne (5-1, 5-2, 5-3),
**caractérisé en ce que**, quand une commande d'arrêt d'éolienne est entrée, les angles de pas des pales d'éolienne sont ajustés pour être en concordance dans une position sans mise en drapeau, de sorte que les angles de pas réels des pales d'éolienne sont comparés afin d'estimer si les angles de pas des pales d'éolienne sont en concordance ou pas, et ensuite, une fois que les angles de pas des pales d'éolienne sont estimés être en concordance, les angles de pas des pales d'éolienne sont déplacés vers une position de mise en drapeau en commandant les pales d'éolienne en utilisant une commande d'angle de pas commune.

2. Dispositif de commande d'angle de pas d'éolienne (10) selon la revendication 1, **caractérisé en ce que**, quand la commande d'arrêt d'éolienne est entrée, une pale d'éolienne représentative est identifiée sur la base de l'angle de pas parmi la pluralité de pales d'éolienne (5-1, 5-2, 5-3), l'angle de pas de la pale d'éolienne représentative et les angles de pas des autres pales d'éolienne sont mis en concordance, et les angles de pas des pales d'éolienne sont ensuite déplacés vers la position de mise en drapeau.

3. Dispositif de commande d'angle de pas d'éolienne (10) selon la revendication 2, **caractérisé en ce que** la pale d'éolienne dont l'angle de pas est le plus proche de la position de mise en drapeau est identifiée comme pale d'éolienne représentative.

4. Dispositif de commande d'angle de pas d'éolienne (10) selon la revendication 3, **caractérisé en ce que**, en établissant la vitesse de déplacement de l'angle de pas de la pale d'éolienne représentative plus petite que les vitesses de déplacement des angles de pas des pales d'éolienne autres que la pale d'éolienne représentative, les angles de pas des pales d'éolienne autres que la pale d'éolienne représentative et l'angle de pas de la pale d'éolienne représentative sont amenés en concordance.

5. Dispositif de commande d'angle de pas d'éolienne (10) configuré pour réaliser une commande d'angle de pas individuelle afin de commander individuellement des angles de pas d'une pluralité de pales d'éolienne (5-1, 5-2, 5-3),
dans lequel, quand une commande d'arrêt d'éolienne est entrée, les angles de pas des pales d'éolienne sont amenés en concordance dans une position sans mise en drapeau de sorte que les angles de pas réels des pales d'éolienne sont comparés afin d'estimer si les angles de pas des pales d'éolienne sont en concordance ou non, et ensuite une fois que les angles de pas des pales sont estimés être en concordance, puis les angles de pas des pales d'éolienne sont déplacés vers une position de mise en drapeau,
**caractérisé en ce que** les angles de pas des pales d'éolienne sont amenés en concordance en répétant des opérations consistant à :
(a) identifier une pale d'éolienne représentative qui a un angle de pas le plus proche de la position de mise en drapeau parmi la pluralité de pales d'éolienne ; et
(b) établir la vitesse de déplacement de l'angle de pas de la pale d'éolienne représentative plus petite que la vitesse de déplacement des angles de pas des pales d'éolienne autres que la pale d'éolienne représentative.

6. Dispositif de commande d'angle de pas d'éolienne (10) selon la revendication 5, **caractérisé en ce que**, une fois que les angles de pas des pales d'éolienne sont en concordance, les pales d'éolienne sont déplacées vers la position de mise en drapeau en commandant les pales d'éolienne en utilisant une commande d'angle de pas commune.

7. Eolienne comportant :
le dispositif de commande d'angle de pas d'éolienne (10) selon les revendications 1 à 6.

8. Procédé de commande d'angle de pas d'éolienne destiné à réaliser une commande d'angle de pas indépendante afin de commander individuellement des angles de pas d'une pluralité de pales d'éolienne,
**caractérisé en ce que**, quand une commande d'arrêt d'éolienne est entrée, les angles de pas des pales d'éolienne sont ajustés pour être en concordance dans une position sans mise en drapeau, de sorte que les angles de pas réels des pales d'éolienne sont comparés afin d'estimer su les angles de pas des pales d'éolienne sont en concordance ou non, et ensuite, une fois que les angles de pas des pales d'éolienne sont en concordance, les angles de pas des pales d'éolienne sont déplacés vers une position de mise en drapeau en commandant les pales d'éolienne en utilisant une commande d'angle de pas commune.

9. Procédé de commande d'angle de pas d'éolienne destiné à réaliser une commande d'angle de pas indépendante afin de commander individuellement des angles de pas d'une pluralité de pales d'éolienne (5-1, 5-2, 5-3),
selon lequel, quand une commande d'arrêt d'éolienne est entrée, les angles de pas des pales d'éolienne sont amenés en concordance dans une position sans mise en drapeau, de sorte que les angles de pas réels des pales d'éolienne sont comparés afin d'estimer si les angles de pas des pales d'éolienne sont en concordance ou non, et ensuite, une fois que les angles de pas des pales sont estimés être en concordance, les angles de pas des pales d'éolienne sont alors déplacés jusqu'à une position de mise en drapeau, **caractérisé en ce que** les angles de pas des pales d'éolienne sont amenés en concordance en répétant des opérations consistant à :
(a) identifier une pale d'éolienne représentative qui a un angle de pas le plus proche de la position de mise en drapeau parmi la pluralité de pales d'éolienne ; et
(b) établir la vitesse de déplacement de l'angle de pas de la pale d'éolienne représentative plus petite que les vitesses de déplacement des angles de pas des pales d'éolienne autres que la pale d'éolienne représentative.
